# EUROPEAN PATENT APPLICATION

(11) **EP 4 764 853 A1**
(43) Date of publication of application: **24.06.2026**
(21) Application number: 25220578.6
(22) Date of filing: 03.12.2025
(51) Int. Cl.: G06F 9/48, G06F 9/50

(54) **VIRTUAL MACHINE MIGRATION WITH MWAIT SUPPORT**

(30) Priority: 18.12.2024 US 202418986334
(71) Applicant: Red Hat, LLC, Raleigh, NC 27601 (US)
(72) Inventor: TSIRKIN, Michael, Raleigh, 27601 (US)
(74) Representative: Murgitroyd & Company

(57) **Abstract**

A first computing system determines that a first virtual machine (VM) executing on the first computing system is to be live migrated to generate a second VM on a second computing system. The first computing system requests from the second computing system power state configuration data indicative of available power states on the second computing system. The first computing system provides the power state configuration data to a guest operating system (OS) of the first VM, and subsequent to transmitting the power state configuration data to the guest OS, initiates, a switch over to the second computing system, such that subsequent processing is implemented by the second VM and not the first VM.

## Description

### TECHNICAL FIELD

This disclosure relates to a method, computing system and a non-transitory computer-readable medium for virtual machine migration with monitor wait (MWAIT) support.

### BACKGROUND

Virtualization of computing environments provides for scaling and organization of infinite computing environments across finite computing systems. Modern computing hardware allows for large quantities of virtualized computing environments (e.g., virtual machines) to operate within one computing system. In certain situations, it may be desirable or even necessary to transfer data from one computing system to another. When the data to be transferred includes a virtual machine, the process may be referred to as a "migration" and encompasses moving the virtual machine from one computing system to another computing system. For example, a virtual machine may be migrated when the computing system it is currently executing on runs out of memory.

### SUMMARY

A virtual machine can be migrated from a first computing system to a second computing system while maintaining support for certain hardware specific commands or instructions regardless of the actual underlying hardware of the first computing system or second computing system. Prior to migration, the first computing system may communicate with the second computing system and determine the necessary configuration of the virtual machine to effectively utilize hardware specific commands of the second computing system. The first computing system may configure the virtual machine in a manner such that, upon execution, at the second computing system, the virtual machine can utilize the hardware specific commands of the second computing system.

In accordance with a first aspect of the present disclosure, a method is provided. The method includes determining, by a first computing system, that a first virtual machine (VM) executing on the first computing system is to be live migrated to generate a second VM on a second computing system. The method further includes requesting, by the first computing system from the second computing system, power state configuration data indicative of available power states on the second computing system. The method further includes providing, by the first computing system, the power state configuration data to a guest operating system (OS) of the first VM. The method further includes subsequent to transmitting the power state configuration data to the guest OS, initiating, by the first computing system a switch over to the second computing system, such that subsequent processing is implemented by the second VM and not the first VM.

The method may further comprise: prior to initiating the switch over, transmitting, by the first computing system, a plurality of memory pages associated with the first VM to the second computing system.

The method may further comprise: determining, by the first computing system, that the guest OS received the power state configuration data.

Determining that the guest OS received the power state configuration data may comprise: receiving, by the guest OS, the power state configuration data; invoking, by the guest OS, an Advanced Configuration and Power Interface (ACPI) method to update a power state list associated with the guest OS based, at least in part, on the power state configuration data, the ACPI method operable to update the power state list and cause an exit by the first VM to a hypervisor of the first computing system; and in response to the first VM exiting to the hypervisor, determining, by the hypervisor, that the power state list associated with the guest OS contains the available power states indicated by the power state configuration data.

Determining that the guest OS received the power state configuration data may comprise: configuring, by the first computing system, the first VM to exit to a hypervisor upon execution of a Monitor Wait (MWAIT) instruction by the guest OS, the MWAIT instruction identifying a power state via a hint value set by the first VM; determining, by the hypervisor, that the guest OS executed the MWAIT instruction and the first VM exited to the hypervisor; and determining, by the hypervisor, that the hint value associated with the MWAIT instruction identifies an available power state indicated by the power state configuration data.

The method may further comprise: subsequent to providing the power state configuration data to the guest OS of the first VM and prior to initiating the switch over to the second computing system, setting, by the first computing system, a timer; determining, by the first computing system, that the timer has elapsed and the first computing system has not determined that the guest OS has received the power state configuration data; responsive to determining that the timer has elapsed and the first computing system has not determined that the guest OS has received the power state configuration data, sending, by the first computing system to the second computing system, a message indicating that the guest OS has not received the power state configuration data; receiving, by the second computing system, the message; and configuring, by the second computing system, the second VM to exit to a hypervisor of the second computing system upon execution of an MWAIT instruction by a guest OS of the second VM, the MWAIT instruction identifying a power state via a hint value set by the second VM.

The method may further comprise: determining, by the hypervisor of the second computing system, that the guest OS of the second VM executed the MWAIT instruction and the second VM exited to the hypervisor of the second computing system; determining, by the hypervisor of the second computing system, that the hint value associated with the MWAIT instruction identifies an available power state of the second computing system; and in response to determining that the hint value associated with the MWAIT instruction identifies the available power state of the second computing system, configuring, by the second computing system, the second VM to not exit to the hypervisor of the second computing system upon execution of the MWAIT instruction.

The method may further comprise: determining, by the first computing system, that the power state configuration data indicates that at least one power state associated with the second computing system is different from any power state associated with the first computing system; and responsive to determining that the at least one power state is different from any power state associated with the first computing system, providing, by the first computing system, the power state configuration data to the guest OS of the first VM.

The available power states may be associated with a processor device of the second computing system.

The method may further comprise: receiving, via the first VM, the power state configuration data; providing, via the first VM to the first computing system, a confirmation of receipt of the power state configuration data; and replacing, via the first VM, host power state configuration data indicative of available power states on the first computing system with the power state configuration data indicative of the available power states on the second computing system.

In accordance with a second aspect of the present disclosure, a computing system is provided. The computing system includes a system memory, and a processor device coupled to the system memory. The processor device is configured to determine that a first VM executing on the processor device is to be live migrated to generate a second VM on a second computing system. The processor device is further configured to request, from the second computing system, power state configuration data indicative of available power states on the second computing system. The processor device is further configured to provide the power state configuration data to a guest OS of the first VM. The processor device is further configured to subsequent to transmitting the power state configuration data to the guest OS, initiate, a switch over to the second computing system, such that subsequent processing is implemented by the second VM and not the first VM.

The processor device may be further configured to, prior to initiating the switch over, transmit a plurality of memory pages associated with the first VM to the second computing system.

The processor device may be further configured to determine that the guest OS received the power state configuration data.

To determine that the guest OS received the power state configuration data, the processor device may be further configured to: receive, by the guest OS, the power state configuration data; invoke by the guest OS, an Advanced Configuration and Power Interface (ACPI) method to update a power state list associated with the guest OS based, at least in part, on the power state configuration data, the ACPI method operable to update the power state list and cause an exit by the first VM to a hypervisor of the computing system; and in response to the first VM exiting to the hypervisor, determine, by the hypervisor, that the power state list associated with the guest OS contains the available power states indicated by the power state configuration data.

To determine that the guest OS received the power state configuration data, the processor device may be further configured to: configure the first VM to exit to a hypervisor upon execution of a Monitor Wait (MWAIT) instruction by the guest OS, the MWAIT instruction identifying a power state via a hint value set by the first VM; determine that the guest OS executed the MWAIT instruction and the first VM exited to the hypervisor; and determine that the hint value associated with the MWAIT instruction identifies an available power state indicated by the power state configuration data.

The processor device may be further configured to: subsequent to providing the power state configuration data to the guest OS of the first VM and prior to initiating the switch over to the second computing system, set a timer; determine that the timer has elapsed and the processor device has not determined that the guest OS has received the power state configuration data; responsive to determining that the timer has elapsed and the processor device has not determined that the guest OS has received the power state configuration data, send, to the second computing system, a message indicating that the guest OS has not received the power state configuration data; receive, by the second computing system, the message; and configure, by the second computing system, the second VM to exit to a hypervisor of the second computing system upon execution of an MWAIT instruction by a guest OS of the second VM, the MWAIT instruction identifying a power state via a hint value set by the second VM.

The processor device may be further configured to: determine that the power state configuration data indicates that at least one power state associated with the second computing system is different from any power state associated with the processor device; and responsive to determining that the at least one power state is different from any power state associated with the processor device, provide the power state configuration data to the guest OS of the first VM.

The available power states may be associated with a processor device of the second computing system.

The processor device may be further configured to: receive, via the first VM, the power state configuration data; provide, via the first VM to the processor device, a confirmation of receipt of the power state configuration data; and replace, via the first VM, host power state configuration data indicative of available power states on the processor device with the power state configuration data indicative of the available power states on the second computing system.

In accordance with a third aspect of the present disclosure, a non-transitory computer-readable storage medium is provided. The non-transitory computer-readable storage medium includes executable instructions to cause a processor device to perform the method of the first aspect or any of its optional examples. The non-transitory computer-readable storage medium includes executable instructions which, when executed by a processor device, cause the processor device to determine that a first VM executing on the processor device is to be live migrated to generate a second VM on a second computing system. The instructions further cause the processor device to request, from the second computing system, power state configuration data indicative of available power states on the second computing system. The instructions further cause the processor device to provide the power state configuration data to a guest OS of the VM. The instructions further cause the processor device to, subsequent to transmitting the power state configuration data to the guest OS, initiate, a switch over to the second computing system, such that subsequent processing is implemented by the second VM and not the first VM.

The processor device may be further caused to, prior to initiating the switch over, transmit a plurality of memory pages associated with the first VM to the second computing system.

The processor device may be further caused to determine that the guest OS received the power state configuration data.

To determine that the guest OS received the power state configuration data, the processor device may be further caused to: receive, by the guest OS, the power state configuration data; invoke by the guest OS, an Advanced Configuration and Power Interface (ACPI) method to update a power state list associated with the guest OS based, at least in part, on the power state configuration data, the ACPI method operable to update the power state list and cause an exit by the first VM to a hypervisor of the computing system; and in response to the first VM exiting to the hypervisor, determine, by the hypervisor, that the power state list associated with the guest OS contains the available power states indicated by the power state configuration data.

To determine that the guest OS received the power state configuration data, the processor device may be further caused to: configure the first VM to exit to a hypervisor upon execution of a Monitor Wait (MWAIT) instruction by the guest OS, the MWAIT instruction identifying a power state via a hint value set by the first VM; determine that the guest OS executed the MWAIT instruction and the first VM exited to the hypervisor; and determine that the hint value associated with the MWAIT instruction identifies an available power state indicated by the power state configuration data.

The processor device may be further caused to: subsequent to providing the power state configuration data to the guest OS of the first VM and prior to initiating the switch over to the second computing system, set a timer; determine that the timer has elapsed and the processor device has not determined that the guest OS has received the power state configuration data; responsive to determining that the timer has elapsed and the processor device has not determined that the guest OS has received the power state configuration data, send, to the second computing system, a message indicating that the guest OS has not received the power state configuration data; receive, by the second computing system, the message; and configure, by the second computing system, the second VM to exit to a hypervisor of the second computing system upon execution of an MWAIT instruction by a guest OS of the second VM, the MWAIT instruction identifying a power state via a hint value set by the second VM.

The processor device may be further caused to: determine that the power state configuration data indicates that at least one power state associated with the second computing system is different from any power state associated with the processor device; and responsive to determining that the at least one power state is different from any power state associated with the processor device, provide the power state configuration data to the guest OS of the first VM.

The available power states may be associated with a processor device of the second computing system.

The processor device may be further caused to: receive, via the first VM, the power state configuration data; provide, via the first VM to the processor device, a confirmation of receipt of the power state configuration data; and replace, via the first VM, host power state configuration data indicative of available power states on the processor device with the power state configuration data indicative of the available power states on the second computing system.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figures 1A - 1C are block diagrams of an environment suitable for virtual machine migration with Monitor Wait (MWAIT) support at different points in time according to some implementations;
Figure 2 illustrates a sequence diagram of messages communicated between and actions taken by various components illustrated in Figures 1A - 1C for virtual machine migration with MWAIT support according to some implementations;
Figures 3A and 3B illustrate sequence diagrams of messages communicated between, and actions taken by various components illustrated in Figures 1A - 1C for virtual machine migration with MWAIT support according to some implementations;
Figure 4 illustrates a sequence diagram of messages communicated between and actions taken by various components illustrated in Figures 1A - 1C for virtual machine migration with MWAIT support according to some implementations;
Figure 5 is a flowchart of a method for virtual machine migration with MWAIT support according to some implementations;
Figure 6 is a simplified block diagram of the environment illustrated in Figures 1A-1C according to one implementation; and
Figure 7 is a block diagram of a computing system suitable for implementing examples according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Distributed computing systems can be made of various quantities of individual computing systems. Distributed computing systems can be made of two computing systems, ten computing systems, or even a thousand computing systems. To effectively utilize the entire distributed computing system, various tools and software applications exist to manage the distributed computing system. Some example management operations of a distributed computing system include transferring data from one system to another and activating and deactivating various individual computing systems based on user demand.

Within distributed computing systems, each computing system has its own processor device(s) (e.g., CPU, GPU), memory, and operating system. It is uncommon for each computing system of a distributed computing system to contain identical hardware.

A distributed computing system may host a large quantity of virtualized computing systems such as virtual machines. Using distributed computing systems for virtual machine hosting allows for dozens, hundreds or even thousands of computing environments within a substantially smaller amount of bare metal computing systems. A virtual machine is typically configured to use hardware specific instructions or commands based on the bare metal computing system on which the virtual machine is being hosted.

However, hardware specific configurations may differ among bare metal computing systems that have different components, such as different processor devices. It may be desirable for an operating system to utilize certain hardware specific instructions to implement a desired functionality. For example, many modern processor devices allow the operating system to set a power state of the processor device to a desired power state to reduce power usage. Such power states may, for example, be used to instruct a processor device to utilize less power when processing instructions, or used to instruct the processor device to enter an idle state during which little or no power will be used.

Processor devices of computing systems do not have standardized power states or instructions for entering power states. Further, power states of processor devices and their instructions may change between models, or even iterations of the same model. As an example, a processor device may use an MWAIT instruction to cause the processor device to enter an idle power state. An MWAIT instruction identifies a particular idle power state via a hint value. However, two processor devices can associate different behavior to the same hint values.

A hypervisor may, during initialization of a virtual machine, configure the virtual machine to use particular hint values to implement desired idle states. The guest operating system of the virtual machine may then use such hint values to implement desired idle states. For a variety of reasons, a first computing system may determine that a virtual machine is to be migrated from the first computing system to a second computing system. The second computing system may contain a different processor device make and/or model than the processor device of the first computing system and may associate different behavior to a particular hint value than the processor device of the first computing system. After the virtual machine is migrated to the second computing device the virtual machine may utilize the hint values with which the virtual machine was configured by the first computing device. The hint values may identify unknown idle states or different idle states than expected, and may cause unexpected and undesirable behavior on the second computing device, such as processor device usage or latency spikes.

To avoid such behavior, a computing system may disable the ability for a guest OS to substantively utilize the MWAIT instruction, and upon execution of an MWAIT instruction may treat the MWAIT instruction as a NOP (no-operation) instruction. While disabling the usage of the MWAIT instruction eliminates potential MWAIT instruction issues when a virtual machine is live migrated between computing devices with different processor devices, doing so also eliminates the ability to preferentially put a processor device into a desired idle state and thus results in less efficient computing as the processor device is unable to utilize the full potential of its available power states.

Accordingly, implementations described herein are directed to virtual machine migration with MWAIT support. In particular, a first computing system may determine that a first virtual machine is to be live migrated to a second computing system to generate a second virtual machine on the second computing system. The first computing system may configure the first virtual machine to utilize the hardware of the second computing system. In some implementations, the first computing system may configure the first virtual machine to utilize the second computing system hardware and may migrate the first virtual machine to generate the second virtual machine on the second computing system where the second virtual machine may, subsequent to a switch over event, initiate processing in lieu of the first virtual machine. Alternatively, in some implementations, the virtual machine may be transferred to the second computing system and configured, by the second computing system, to use the hardware specific instructions and power states, like MWAIT.

During a live migration, the first computing system may request, from the second computing system, power state configuration data indicative of available power states on the second computing system. The first computing system may provide the power state configuration data to the first virtual machine which may configure itself to utilize the available power states of the second computing system, rather than the power states of the first computing system. At some point during the live migration, the first computing system initiates a switch over to the target computing system, such that subsequent processing is implemented by the second VM and not the first VM, and the second VM utilizes the second computing system's available power states and thus maintains expected MWAIT functionality.

The implementations described herein provide for a number of technical effects and benefits. As one example technical effect and benefit, implementations described herein improve the efficiency and energy usage of processor devices within computing systems when hosting virtual machines. By utilizing hardware specific configurations of virtual machines across varying computing systems, virtual machines may take full advantage of unique or hardware specific efficiency tools available on their currently hosting computing system, such as hardware specific power states and MWAIT instruction usage and reduce overall energy consumption.

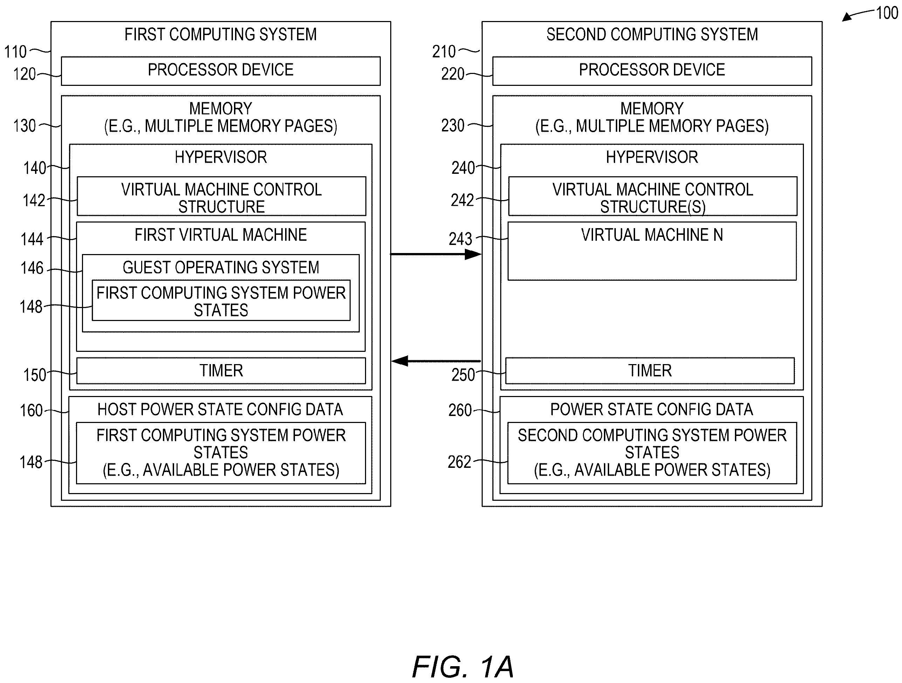

Figures 1A-1C depict a block diagram 100 of an environment suitable for virtual machine migration with MWAIT support at different points in time according to some implementations. Figure 1A depicts an environment suitable for virtual machine migration with MWAIT support before any migration has begun. The block diagram 100 depicts a first computing system 110 having a processor device 120 and a memory 130.The memory 130 can include a hypervisor 140 with a virtual machine control structure 142 (VMCS) and a first virtual machine 144, as well as host power state configuration data 160. In some implementations, the memory 130 may include a timer 150. The first virtual machine 144 includes a guest operating system 146 with first computing system power states 148. As depicted, the first computing system power states 148 may be associated with the host power state configuration data 160. Additionally, the first computing system power states 148 may be associated with the first computing system 110 and processor device 120. The first computing system power states 148 may be indicative of available power states on the first computing system 110 and processor device 120 and the guest operating system 146 and first virtual machine 144 may utilize the first computing system power states 148 during execution.

The block diagram 100 further depicts a second computing system 210 having a processor device 220 and a memory 230. The memory 230 can include a hypervisor 240 with one or more virtual machine control structure 242 (VMCS) and any number of virtual machines, the various virtual machines denoted as virtual machine N 243. In some implementations, the memory 230 may include a timer 250. The power state configuration data 260 may include second computing system power states 262 associated with the second computing system 210 and processor device 220. The second computing system power states 262 may be indicative of available power states on the second computing system 210 and processor device 220.

The first computing system 110 and the second computing system 210 may communicate with each other, establishing and completing a virtual machine migration from the first computing system 110 to the second computing system 210. As an example, the first computing system 110 may determine that the first virtual machine 144 is to be live migrated to a second virtual machine on the second computing system 210. The term "live migrated" as used herein refers to a migration of an executing virtual machine from a source host computing system, such as the first computing system 110, to a target host computing system, such as the second computing system 210. The particular mechanics of implementing the live migration may differ depending on the particular hypervisor 140, but generally involves an initial copying of memory from the source virtual machine to the target host computing system where a second virtual machine, sometimes referred to as the target virtual machine, is generated. To minimize unavailability, the first virtual machine continues to process requests while the initial memory copy phase occurs until a point in time that the target virtual machine is at a state wherein the target virtual machine can take over subsequent processing. At such point, the first computing system 110 initiates a switch over event, at which point in time any subsequent processing is handled by the target virtual machine in lieu of the source virtual machine.

In some implementations, the first computing system 110 may request the power state configuration data 260 from the second computing system 210. The power state configuration data 260 includes the second computing system power states 262 (e.g., available power states of the second computing system 210).

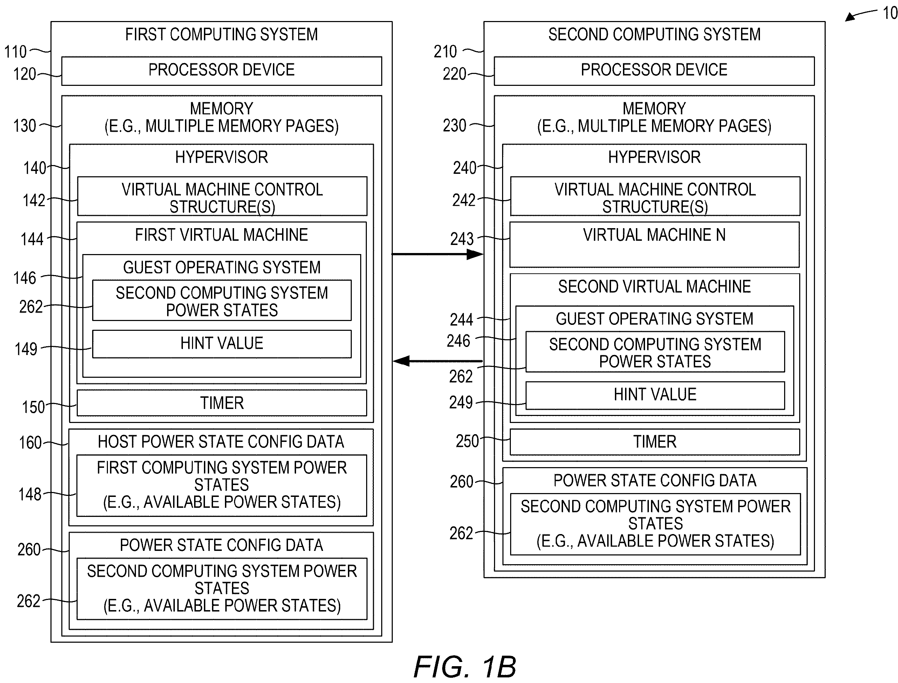

Figure 1B depicts the block diagram 100 during migration of the first virtual machine 144 from the first computing system 110 to the second computing system 210. During migration, the first computing system 110 may transfer a plurality of memory pages associated with the first virtual machine 144 to the second computing system 210. The process of transferring memory pages from the first computing system 110 to the second computing system 210 may be performed iteratively while the first virtual machine 144 continues to execute. As the first virtual machine 144 executes, the first virtual machine 144 may modify memory pages previously transferred, therefore iteratively transferring memory associated with the first virtual machine 144 ensures accurate memory related to the first virtual machine 144 on the second computing system 210 once migration is complete. In some implementations, the second computing system 210 may begin to instantiate the second virtual machine 244 within the hypervisor 240, based on one or more memory pages associated with the first virtual machine 144 received from the first computing system 110.

In addition, during migration the first computing system 110 may request the power state configuration data 260 from the second computing system 210. As depicted, the first computing system 110 may store the power state configuration data 260 including the second computing system power states 262 in the memory 130. In some implementations, the first computing system 110 may simply provide the power state configuration data 260 to the guest operating system 146 of the first virtual machine 144. However, in some implementations, the first computing system 110 may first determine whether the power state configuration data 260 indicates that at least one power state of the second computing system 210 is different from any power state of the first computing system 110. In response to determining at least one power state is different from any power state associated with the first computing system 110, the first computing system 110 may provide the power state configuration data 260 to the guest operating system 146 of the first virtual machine 144. In some implementations, the first virtual machine 144 may receive the power state configuration data 260 and provide a confirmation of receipt of the power state configuration data 260 to the first computing system 110. In addition, the first virtual machine 144 may replace the host power state configuration data 160 indicative of the first computing system power states 148 (e.g., the available power states on the first computing system 110) with the power state configuration data 260 indicative of the second computing system power states 262 (e.g., power states available on the second computing system 210).

The process of receiving, providing, and replacing the power state configuration data 260 may be performed through various methods. In some implementations, the first computing system 110 may determine the guest operating system 146 has received the power state configuration data 260. For instance, the guest operating system 146 may receive the power state configuration data 260 and invoke an (Advanced Configuration and Power Interface) ACPI method to update a power state list associated with the guest operating system 146, based on the power state configuration data 260. The ACPI method may update the power state list of the guest operating system 146 to utilize the second computing system power states 262 and may cause the first virtual machine 144 to exit (e.g., VMexit) to the hypervisor 140. The first computing system 110 may determine the guest operating system 146 received the power state configuration data 260 based on the first virtual machine 144 exiting to the hypervisor 140 via the ACPI method.

As another example, in some implementations, the first computing system 110 may alter the VMCS 142 so that the first virtual machine 144 exits to the hypervisor 140 upon an execution of an MWAIT instruction by the guest operating system 146. To implement a desired power state, the guest operating system 146 sets a hint value 149 to a desired power state and executes the MWAIT instruction. The execution of the MWAIT instruction causes a VM exit to the hypervisor 140. The hypervisor 140 reads the hint value 149 and determines that the guest operating system 146 set the hint value 149 to an available power state of the second computing system 210 (e.g., second computing system power states 262) and thus that the guest operating system 146 is utilizing the second computing system power states 262.

In some implementations, after providing the power state configuration data 260 to the guest operating system 146 the first computing system 110 sets a timer 150 to a predetermined value. Once the timer 150 has elapsed, the first computing system 110 may determine whether the guest operating system 146 has received the power state configuration data 260, via, for example, one of the mechanisms described above. If not, the first computing system 110 may send the second computing system 210 a message indicating the guest operating system 146 has not received the power state configuration data 260. The second computing system 210 may receive the message and configure the second virtual machine 244 to exit to the hypervisor 240 upon execution of an MWAIT instruction by the second guest operating system 246, once the second virtual machine 244 begins execution on the second computing system 210. The MWAIT instruction may identify a power state via a hint value 249 set by the second virtual machine 244.

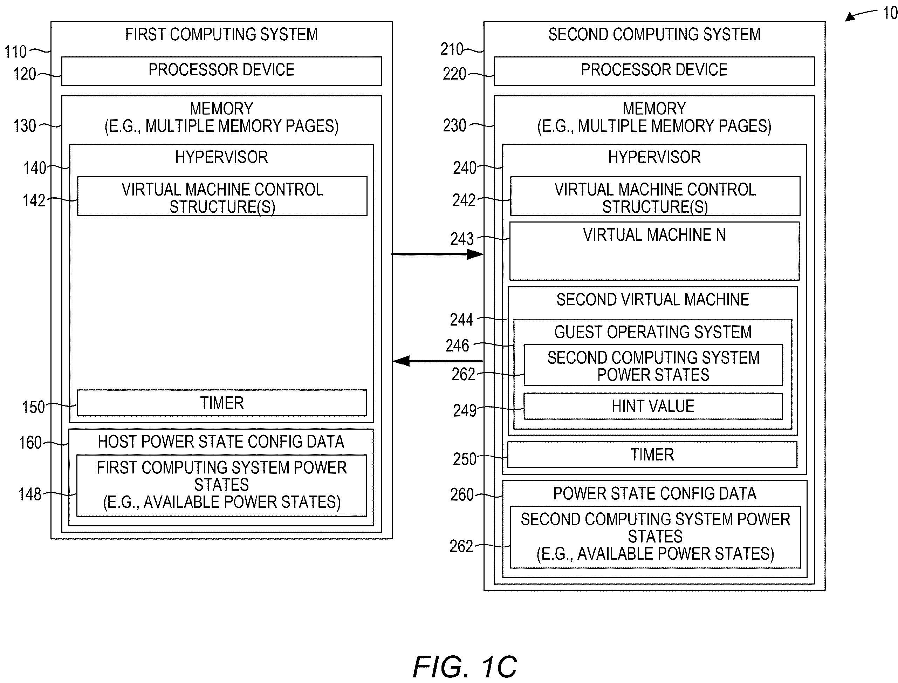

Figure 1C depicts the block diagram 100 after migration of the first virtual machine 144 to the second virtual machine 244 has completed. In some implementations, at some point in time after the first computing system 110 transfers the power state configuration data 260 to the guest operating system 146, a switch over may occur from the first computing system 110 to the second computing system 210. During the switch over, the first virtual machine 144 may cease operation on the first computing system 110 and begin operation as the second virtual machine 244 on the second computing system 210 such that subsequent processing occurs on the second virtual machine 244 and second guest operating system 246 instead of the first virtual machine 144. In some instances, a final iteration of memory pages associated with the first virtual machine 144 may be transferred to the second computing system 210 before the switch over.

In some implementations, the second computing system 210 may determine the second guest operating system 246 received the power state configuration data 260 after the switch over. For instance, the hypervisor 240 may determine the second guest operating system 246 executed an MWAIT instruction and the second virtual machine 244 exited to the hypervisor 240. The hypervisor 240 may determine the hint value 249 associated with the MWAIT instruction identifies an available power state of the second computing system 210 (e.g., second computing system power states 262) and, in response, configure the second virtual machine 244 to not exit to the hypervisor 240 upon execution of further MWAIT instructions. In this instance, the second computing system 210 is now aware the second virtual machine 244 is operating with the second computing system power states 262 and may effectively utilize the MWAIT instruction and second computing system power states 262.

It is noted that, because the hypervisor 140 is a component of the first computing system 110, functionality implemented by the hypervisor 140 may be attributed to the first computing system 110 generally. Moreover, in examples where the hypervisor 140 comprises software instructions that program the processor device 120 to carry out functionality discussed herein, functionality implemented by the hypervisor 140 may be attributed herein to the processor device 120. The same is true for the second computing system 210, processor device 220, and hypervisor 240, respectively.

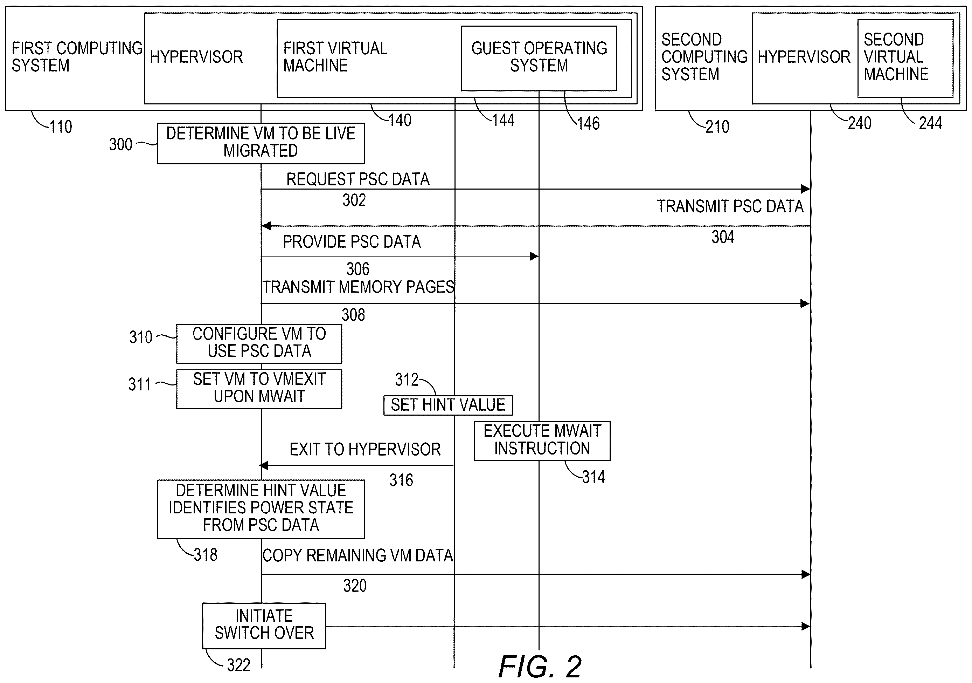

Figure 2 illustrates a sequence diagram of messages communicated between and actions taken by various components illustrated in Figures 1A - 1C for virtual machine migration with MWAIT support according to some implementations. The hypervisor 140 may determine the first virtual machine 144 is to be live migrated to the second computing system 210 to generate the second virtual machine 244 (step 300). To facilitate migrating with MWAIT support, the hypervisor 140 may request the power state configuration (PSC) data 260 from the second computing system 210 (step 302). The PSC data 260 is indicative of one or more available power states on the second computing system 210 and associated with the processor device 220.

The second computing system 210 may transmit the requested PSC data 260 to the hypervisor 140 (step 304). The hypervisor 140 may provide the PSC data 260 to the guest operating system 146 (step 306). In some implementations, the hypervisor 140 may begin transmitting one or more memory pages associated with the first virtual machine 144 to the second computing system 210 as part of the migration (step 308). The memory page transfer may occur throughout the remainder of the migration process and may be used to generate the second virtual machine 244 on the second computing system 210. In some implementations, the transfer of memory pages may be performed iteratively.

The hypervisor 140 may configure the first virtual machine 144 to use the PSC data 260 during subsequent processing (step 310). As an example, the hypervisor 140 may configure the first virtual machine 144 to use the PSC data 260 while executing MWAIT instructions. For instance, in some implementations, the hypervisor 140 may provide the first virtual machine 144 the PSC data 260 in the form of a list of power states, such as second computing system power states 262, and overwrite the available power states in the guest operating system 146 (e.g., the first computing system power states 148) with the second computing system power states 262.

In one implementation, the hypervisor 140 may alter the VMCS 142 associated with the first virtual machine 144 to cause the first virtual machine 144 to perform a VMexit upon execution of the MWAIT command (step 311). The first virtual machine 144 may set a hint value associated with one or more power states from the PSC data 260 to identify a particular desired power state (step 312). The guest operating system 146 may execute an MWAIT instruction (step 314). In response to the execution of the MWAIT instruction, the first virtual machine 144 exits to the hypervisor 140 (step 316). The hypervisor 140 may determine the hint value set by the guest operating system 146 identifies a power state from the PSC data 260, and thus determines that the guest operating system 146 successfully received the PSC data 260 (step 318).

The remaining memory and data associated with the first virtual machine 144 may be transferred to the second computing system 210 (step 320). The hypervisor 140 may initiate a switch over to the second computing system 210 (step 322) and the second virtual machine 244. After the switch over, subsequent processing is performed by the second virtual machine 244 generated on the second computing system 210 during the migration process and processing stops on the first virtual machine 144.

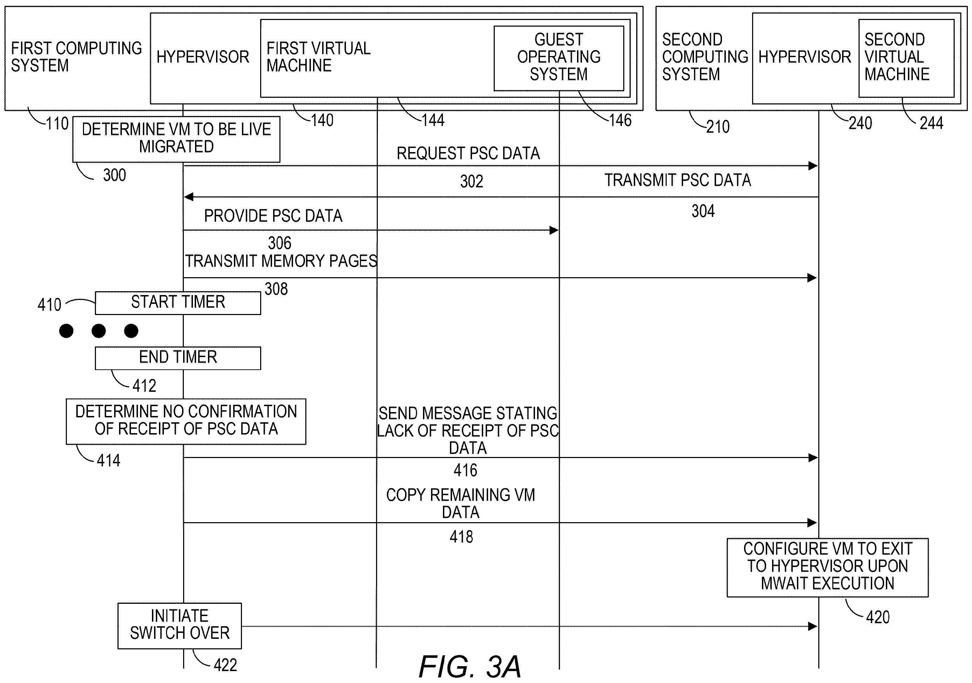

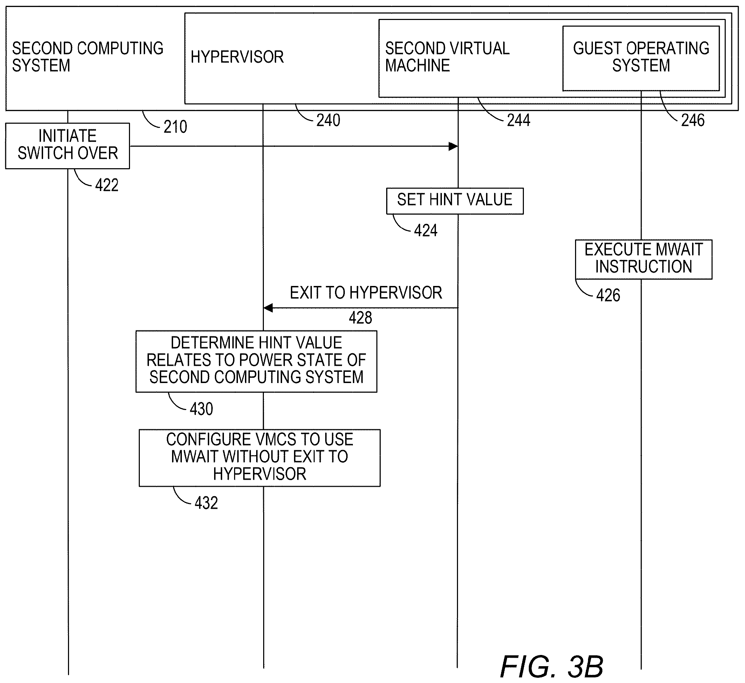

Figures 3A and 3B illustrate sequence diagrams of messages communicated between, and actions taken by various components illustrated in Figures 1A - 1C for virtual machine migration with MWAIT support according to some implementations. Figure 3A depicts operations and communications that may occur before the virtual machine being transferred has begun execution on the second computing system 210. Similar to the method depicted in Figure 2, the migration may begin with steps 300-308 and are incorporated by reference herein.

The hypervisor 140 may initiate a timer, such as the timer 150 depicted in Figures 1A-1C, to a desired period of time (step 410). After the desired period of time, the timer elapses (step 412). The hypervisor 140 determines no action has occurred that indicates the guest operating system 146 has received the PSC data 260 (step 414). In response, the first computing system 110 may send a message to the second computing system 210 indicating that the guest operating system 146 has not received the PSC data 260 (step 416).The hypervisor 140 may copy the remaining memory associated with the first virtual machine 144 to the second computing system 210 (step 418). The second computing system 210 may generate the second virtual machine 244 on the second computing system 210, and may alter the VMCS 242 used by the second virtual machine 244 to cause the second virtual machine 244 to exit to the hypervisor 240 upon execution of an MWAIT instruction (step 420). The hypervisor 140 may initiate a switch over from the first computing system 110 to the second computing system 210 and the first virtual machine 144 to the second virtual machine 244 (step 422).

Referring now to Figure 3B, the guest operating system 246 may set the hint value 249 that identifies a desired power state of the PSC data 260 upon execution of an MWAIT instruction step 424). The guest operating system 146 may execute an MWAIT instruction (step 426). The second virtual machine 244 exits to the hypervisor 240 based on the execution of the MWAIT instruction (step 428). The hypervisor 240 may determine the hint value 249 identifies a power state associated with the PSC data 260 (step 430). The hypervisor 240 may then alter the VMCS 242 so that subsequent executions of the MWAIT command do not result in a VMexit (step 432).

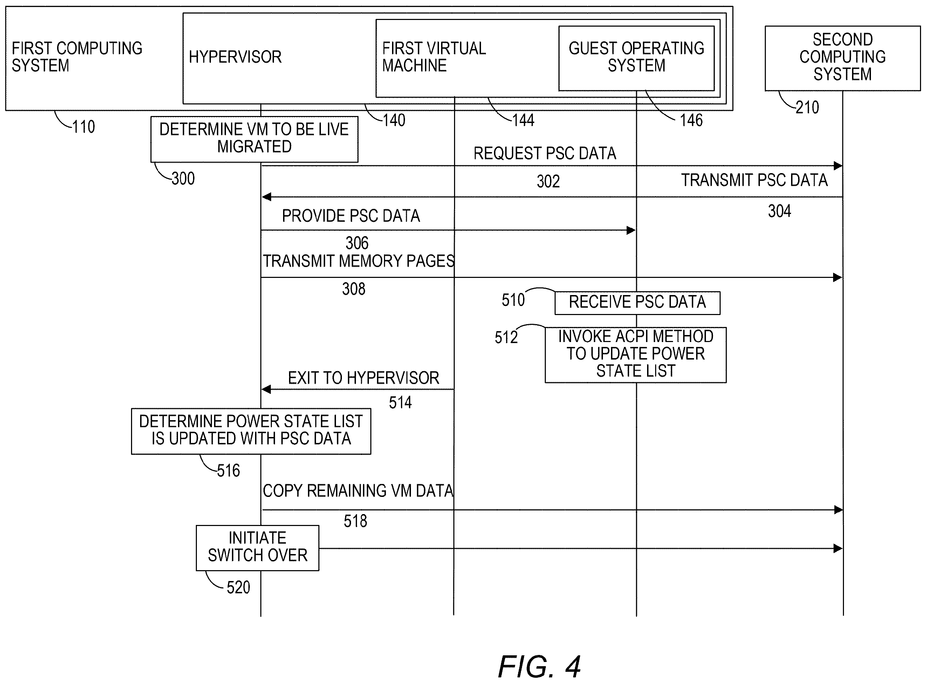

Figure 4 illustrates a sequence diagram of messages communicated between and actions taken by various components illustrated in Figures 1A - 1C for virtual machine migration with MWAIT support according to some implementations. Similar to the methods depicted Figures 2 and 3A-B, the migration may begin with steps 300-308 and such steps are incorporated by reference herein. The guest operating system 146 may receive the PSC data 260 from the hypervisor 140 (step 510). The guest operating system 146 may invoke an ACPI method to update a power state list of the guest operating system 146 and first virtual machine 144 with the PSC data (step 512). In some implementations, the ACPI method may include replacing the power state list of the guest operating system 146 and first virtual machine 144 with the available power states of the second computing system 210, such as the second computing system power states 262. The ACPI method may then cause a VM exit to the hypervisor 140 (step 514).

The hypervisor 140 may determine the power state list associated with the guest operating system 146 and first virtual machine 144 has been updated based on the PSC data 260 and therefore conclude that the guest operating system 146 and first virtual machine 144 received the PSC data 260 (step 516).

The hypervisor 140 may copy any remaining memory associated with the first virtual machine 144 to the second computing system 210 (step 518) and may initiate a switch over to the second computing system 210 such that foregoing processing by the first virtual machine 144 is carried out on the second computing system 210 by the second virtual machine 244 (step 520).

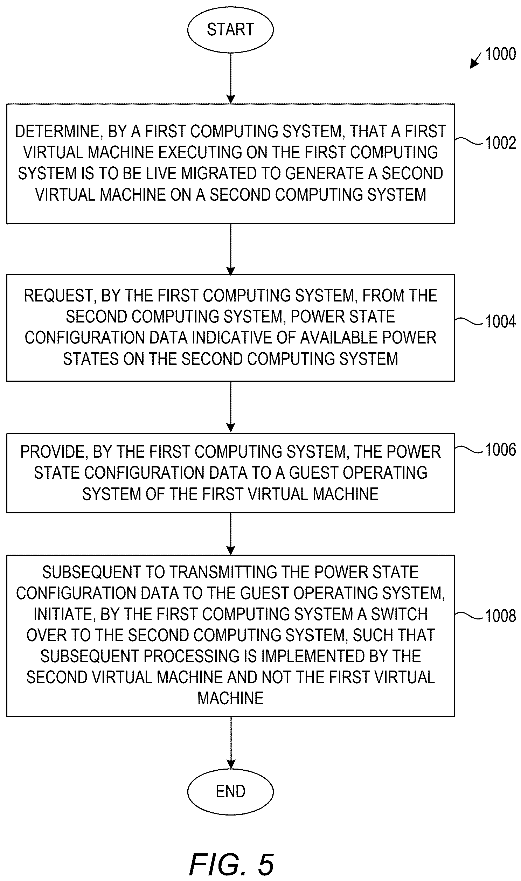

Figure 5 is a flowchart of a method 1000 for virtual machine migration with MWAIT support according to some implementations. Figure 5 will be discussed in conjunction with Figures 1A-1C. The first computing system 110 determines that a first virtual machine 144 executing on the first computing system 110 is to be migrated to generate the second virtual machine 244 on the second computing system 210 (Figure 5, block 1002). The first computing system 110 requests, from the second computing system 210, the power state configuration data 260 indicative of the available power states on the second computing system 210 (e.g., the second computing system power states 262) (Figure 5, block 1004). The first computing system 110 provides the power state configuration data 260 to the guest operating system 146 of the first virtual machine 144 (Figure 5, block 1006). Subsequent to transmitting the power state configuration data 260 to the guest operating system 146, the first computing system 110 initiates a switch over to the second computing system 210, such that subsequent processing is implemented by the second virtual machine 244 and not the first virtual machine 144 (Figure 5, block 1008).

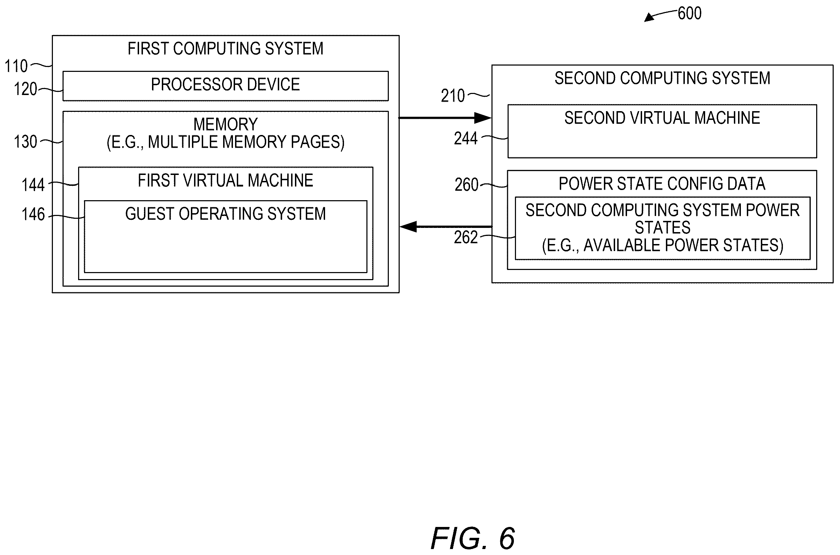

Figure 6 is a simplified block diagram 600 of the environment illustrated in Figures 1A-1C according to one implementation. The first computing system 110 comprises the memory 130 and the processor device 120 communicatively coupled to the memory 130. The processor device 120 is to determine that the first VM 144 executing on the processor device 120 is to be live migrated to generate the second VM 244 on the second computing system 210. The processor device 120 is further to request, from the second computing system 210, the power state configuration data 260 indicative of the available power states 262 on the second computing system 210. The processor device 120 is further to provide the power state configuration data 260 to the guest operating system (OS) 146 of the first VM 144. The processor device 120 is further to, subsequent to transmitting the power state configuration data 260 to the guest OS 146, initiate, a switch over to the second computing system 210, such that subsequent processing is implemented by the second VM 244 and not the first VM 144.

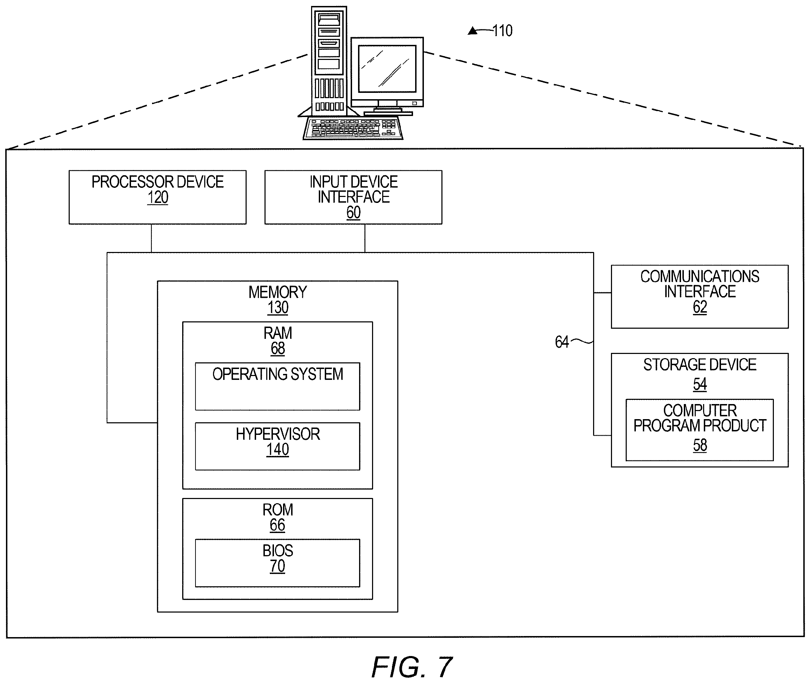

Figure 7 is a block diagram of the first computing system 110 suitable for implementing examples according to one example. The first computing system 110 may comprise any computing or electronic device capable of including firmware, hardware, and/or executing software instructions to implement the functionality described herein, such as a computer server, a desktop computing device, a laptop computing device, or the like. The first computing system 110 includes the processor device 120, the system memory 130, and a system bus 64. The system bus 64 provides an interface for system components including, but not limited to, the system memory 130 and the processor device 120. The processor device 120 can be any commercially available or proprietary processor.

The system bus 64 may be any of several types of bus structures that may further interconnect to a memory bus (with or without a memory controller), a peripheral bus, and/or a local bus using any of a variety of commercially available bus architectures. The system memory 130 may include non-volatile memory 66 (e.g., read-only memory (ROM), erasable programmable read-only memory (EPROM), electrically erasable programmable read-only memory (EEPROM), etc.), and volatile memory 68 (e.g., random-access memory (RAM)). A basic input/output system (BIOS) 70 may be stored in the non-volatile memory 66 and can include the basic routines that help to transfer information between elements within the first computing system 110. The volatile memory 68 may also include a high-speed RAM, such as static RAM, for caching data.

The first computing system 110 may further include or be coupled to a non-transitory computer-readable storage medium such as a storage device 54, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 54 and other drives associated with computer-readable media and computer-usable media may provide non-volatile storage of data, data structures, computer-executable instructions, and the like.

A number of modules can be stored in the storage device 54 and in the volatile memory 68, including an operating system and one or more program modules, which may implement the functionality described herein in whole or in part. All or a portion of the examples may be implemented as a computer program product 58 stored on a transitory or non-transitory computer-usable or computer-readable storage medium, such as the storage device 54, which includes complex programming instructions, such as complex computer-readable program code, to cause the processor device 120 to carry out the steps described herein. Thus, the computer-readable program code can comprise software instructions for implementing the functionality of the examples described herein when executed on the processor device 120. The processor device 120, may serve as a controller, or control system, for the first computing system 110 that is to implement the functionality described herein.

An operator may also be able to enter one or more configuration commands through a keyboard (not illustrated), a pointing device such as a mouse (not illustrated), or a touch-sensitive surface such as a display device. Such input devices may be connected to the processor device 120 through an input device interface 60 that is coupled to the system bus 64 but can be connected by other interfaces such as a parallel port, an Institute of Electrical and Electronic Engineers (IEEE) 1394 serial port, a Universal Serial Bus (USB) port, an IR interface, and the like. The first computing system 110 may also include the communications interface 62, such as an Ethernet transceiver and/or a Wi-Fi transceiver, or the like, suitable for communicating with the network 50 as appropriate or desired.

Individuals will recognize improvements and modifications to the preferred examples of the disclosure. All such improvements and modifications are considered within the scope of the claims that follow.

## Claims

1. A method, comprising:
determining, by a first computing system, that a first virtual machine (VM) executing on the first computing system is to be live migrated to generate a second VM on a second computing system;
requesting, by the first computing system from the second computing system, power state configuration data indicative of available power states on the second computing system;
providing, by the first computing system, the power state configuration data to a guest operating system (OS) of the first VM; and
subsequent to transmitting the power state configuration data to the guest OS, initiating, by the first computing system, a switch over to the second computing system, such that subsequent processing is implemented by the second VM and not the first VM.

2. The method of claim 1, further comprising:
prior to initiating the switch over, transmitting, by the first computing system, a plurality of memory pages associated with the first VM to the second computing system.

3. The method of claim 1, further comprising:
determining, by the first computing system, that the guest OS received the power state configuration data.

4. The method of claim 3, wherein determining that the guest OS received the power state configuration data comprises:
receiving, by the guest OS, the power state configuration data;
invoking, by the guest OS, an Advanced Configuration and Power Interface (ACPI) method to update a power state list associated with the guest OS based, at least in part, on the power state configuration data, the ACPI method operable to update the power state list and cause an exit by the first VM to a hypervisor of the first computing system; and
in response to the first VM exiting to the hypervisor, determining, by the hypervisor, that the power state list associated with the guest OS contains the available power states indicated by the power state configuration data.

5. The method of claim 3, wherein determining that the guest OS received the power state configuration data comprises:
configuring, by the first computing system, the first VM to exit to a hypervisor upon execution of a Monitor Wait (MWAIT) instruction by the guest OS, the MWAIT instruction identifying a power state via a hint value set by the first VM;
determining, by the hypervisor, that the guest OS executed the MWAIT instruction and the first VM exited to the hypervisor; and
determining, by the hypervisor, that the hint value associated with the MWAIT instruction identifies an available power state indicated by the power state configuration data.

6. The method of claim 1, further comprising:
subsequent to providing the power state configuration data to the guest OS of the first VM and prior to initiating the switch over to the second computing system, setting, by the first computing system, a timer;
determining, by the first computing system, that the timer has elapsed and the first computing system has not determined that the guest OS has received the power state configuration data;
responsive to determining that the timer has elapsed and the first computing system has not determined that the guest OS has received the power state configuration data, sending, by the first computing system to the second computing system, a message indicating that the guest OS has not received the power state configuration data;
receiving, by the second computing system, the message; and
configuring, by the second computing system, the second VM to exit to a hypervisor of the second computing system upon execution of an MWAIT instruction by a guest OS of the second VM, the MWAIT instruction identifying a power state via a hint value set by the second VM; .

7. The method of claim 6, further comprising:
determining, by the hypervisor of the second computing system, that the guest OS of the second VM executed the MWAIT instruction and the second VM exited to the hypervisor of the second computing system;
determining, by the hypervisor of the second computing system, that the hint value associated with the MWAIT instruction identifies an available power state of the second computing system; and
in response to determining that the hint value associated with the MWAIT instruction identifies the available power state of the second computing system, configuring, by the second computing system, the second VM to not exit to the hypervisor of the second computing system upon execution of the MWAIT instruction.

8. The method of claim 1, further comprising:
determining, by the first computing system, that the power state configuration data indicates that at least one power state associated with the second computing system is different from any power state associated with the first computing system; and
responsive to determining that the at least one power state is different from any power state associated with the first computing system, providing, by the first computing system, the power state configuration data to the guest OS of the first VM.

9. The method of claim 1, wherein the available power states are associated with a processor device of the second computing system.

10. The method of claim 1, further comprising:
receiving, via the first VM, the power state configuration data;
providing, via the first VM to the first computing system, a confirmation of receipt of the power state configuration data; and
replacing, via the first VM, host power state configuration data indicative of available power states on the first computing system with the power state configuration data indicative of the available power states on the second computing system.

11. A computing system, comprising:
a system memory; and
a processor device communicatively coupled to the system memory, the processor device configured to carry out the method of any of claims 1 to 10.

12. A non-transitory computer-readable medium having stored thereon computer-executable instructions which, when executed by a processor device, cause the processor device to perform the method of any of claims 1 to 10.
